# EUROPEAN PATENT APPLICATION

(11) **EP 2 746 572 A2**
(43) Date of publication of application: **25.06.2014**
(21) Application number: 13196467.8
(22) Date of filing: 10.12.2013
(51) Int. Cl.: F03D 1/06

(54) **Root assemblies with external structural connection supports for rotor blades**

(30) Priority: 19.12.2012 US 201213719711
(71) Applicant: General Electric Company, Schenectady, New York 12345 (US)
(72) Inventor: Kyriakides, Steven Alan, Greenville, SC South Carolina 29615 (US); Hardison, Richard Allen, Greenville, SC South Carolina 29615 (US); Vossler, Alexander William, Greenville, SC South Carolina 29615 (US)
(74) Representative: Cleary, Fidelma

(57) **Abstract**

Root assemblies (310) for rotor blades include a root portion (208) having an inner surface (209) and an outer surface (210), wherein the root portion (208) is configured to extend from an airfoil portion of the rotor blade. The root assemblies (310) further include at least one external structural connection support (311) connected to at least the inner surface (209) or the outer surface (210) of the root portion (208), wherein the at least one external structural connection support connects to a hub of a wind turbine to facilitate the connection of the rotor blade.

## Description

### BACKGROUND OF THE INVENTION

The subject matter disclosed herein relates to root assemblies for wind turbine rotor blades and, more specifically, to root assemblies with external structural connection supports.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The size, shape, and weight of rotor blades are factors that contribute to energy efficiencies of wind turbines. An increase in rotor blade size increases the energy production of a wind turbine, while a decrease in weight also furthers the efficiency of a wind turbine. Furthermore, as rotor blade sizes grow, extra attention needs to be given to the structural integrity of the rotor blades. Presently, large commercial wind turbines in existence and in development are capable of generating from about 1.5 to about 12.5 megawatts of power. These larger wind turbines may have rotor blade assemblies larger than 90 meters in diameter. Additionally, advances in rotor blade shape encourage the manufacture of a forward swept-shaped rotor blade having a general arcuate contour from the root to the tip of the blade, providing improved aerodynamics. Accordingly, efforts to increase rotor blade size, decrease rotor blade weight, and increase rotor blade strength, while also improving rotor blade aerodynamics, aid in the continuing growth of wind turbine technology and the adoption of wind energy as an alternative energy source.

As the size of wind turbines increases, particularly the size of the rotor blades, so do the respective requirements of connecting the various components together. For example, the connection between the rotor blades and the hub must be able to withstand significant forces from the weight and rotation of the rotor blades. Some connections utilize bolts, pins or other structural fixtures that are driven directly into the root portion of the rotor blade. However, the placement of such structural fixtures into the root portion necessitates the removal or displacement of the original material (e.g., composite material) thereby potentially adding manufacturing costs and/or affecting the structural integrity of the rotor blade. Furthermore, the size of the bolts, pins or other structural fixtures may be limited by the thickness of the root portion.

Accordingly, alternative root assemblies for rotor blades would be welcome in the art.

### BRIEF DESCRIPTION OF THE INVENTION

In one aspect, the invention resides in a root assembly for a rotor blade. The root assembly includes a root portion having an inner surface and an outer surface, wherein the root portion is configured to extend from an airfoil portion of the rotor blade. The root assembly further includes at least one external structural connection support connected to at least the inner surface or the outer surface of the root portion, wherein the at least one external structural connection support connects to a hub of a wind turbine to facilitate the connection of the rotor blade.

In another aspect, the invention resides in a root assembly for a rotor blade. The root assembly includes a root portion having an outer surface, wherein the root portion is configured to extend from an airfoil portion of the rotor blade. The root assembly further includes at least one external structural connection support connected to the outer surface of the root portion, wherein the at least one external structural connection support connects to a hub of a wind turbine to facilitate the connection of the rotor blade.

In yet another aspect, the invention resides in a turbine blade including an airfoil portion and a root assembly. The root assembly includes a root portion and at least one external structural connection support, wherein the root portion extends from the airfoil portion and has an inner surface and an outer surface. The at least one external structural connection support connects to at least the inner surface or the outer surface of the root portion such that the at least one external structural connection support connects to a hub of a wind turbine to facilitate the connection of the rotor blade.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a schematic illustration of a wind turbine according to one or more embodiments shown or described herein;
FIG. 2 is a schematic illustration of a rotor blade according to one or more embodiments shown or described herein;
FIG. 3 is a schematic illustration of a root assembly according to one or more embodiments shown or described herein;
FIG. 4 is a schematic illustration of another root assembly according to one or more embodiments shown or described herein;
FIG. 5 is a schematic illustration of another root assembly according to one or more embodiments shown or described herein;
FIG. 6 is a schematic illustration of another root assembly according to one or more embodiments shown or described herein;
FIG. 7 is a schematic illustration of another root assembly according to one or more embodiments shown or described herein; and,
FIG. 8 illustrates a method for attaching a rotor blade to a hub of a wind turbine according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

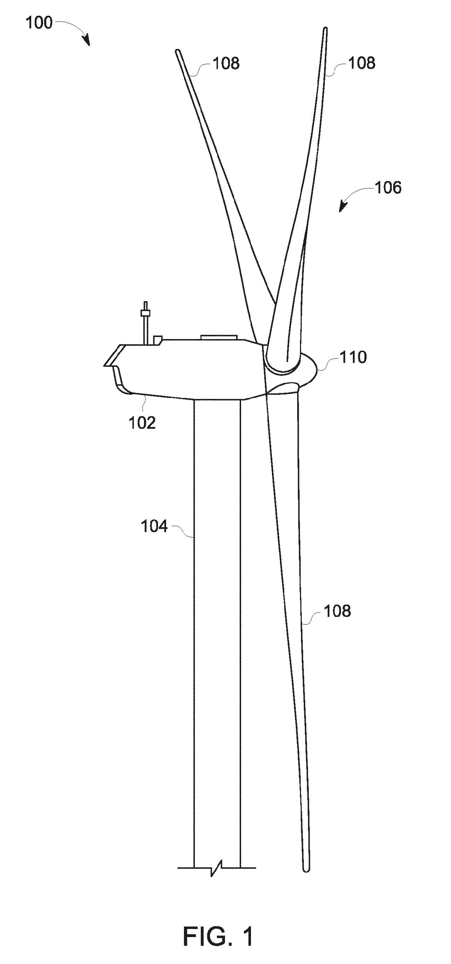

With reference to FIG. 1, a wind turbine 100 is illustrated having a nacelle 102 housing a generator (not shown in FIG. 1). The nacelle 102 is a housing mounted atop a tower 104, only a portion of which is shown in FIG. 1. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. Wind turbine 100 also comprises a rotor 106 that includes one or more rotor blades 108 attached to a hub 110. Although wind turbine 100 illustrated in FIG. 1 includes three rotor blades 108, there are no specific limits on the number of rotor blades 108 required by the present disclosure.

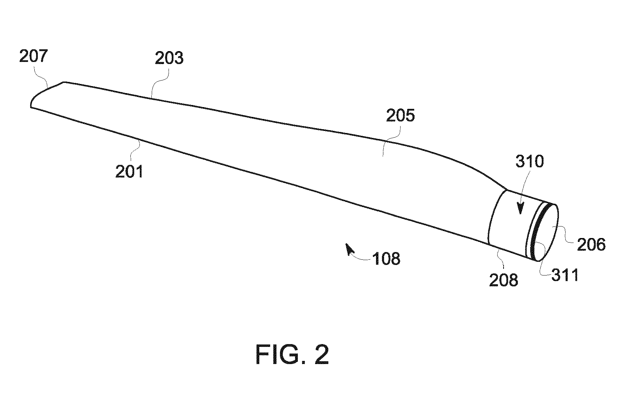

FIG. 2 illustrates a rotor blade 108 having a leading edge 201 and a trailing edge 203. The rotor blade 108 includes an airfoil portion 205 extending from the tip 207 to the root assembly 310, which is connectable to the hub 110 of the wind turbine 100 as will become appreciated herein.

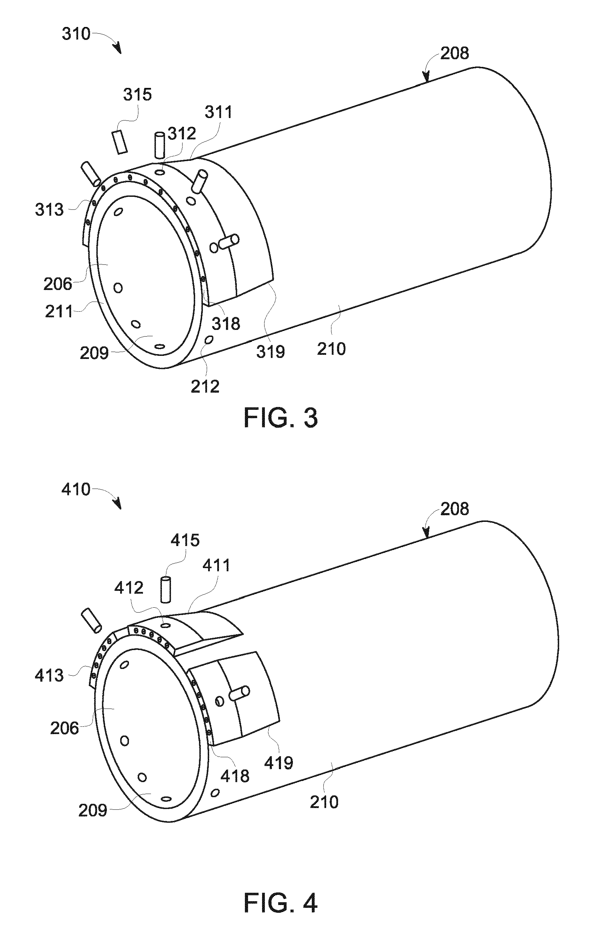

As best illustrated in FIGS. 2 and 3, the root assembly 310 generally comprises a root portion 208 and at least one external structural connection support 311 connected to the root portion 208. The root portion 208 generally comprises a portion of the rotor blade 108 that extends from airfoil portion 205. The root portion can thereby comprise a variety of shapes, sizes and configurations to facilitate the transition between the airfoil portion 205 of the rotor blade 108 and the hub 110 of the wind turbine 100 (FIG. 1). For example, in some embodiments, such as that illustrated in FIGS. 2 and 3, the root portion 208 of the root assembly 310 may comprise a hollow cylindrical configuration at its hub end 206 (i.e., the end facing the hub 110). However, in other embodiments, the root portion 208 may additionally or alternatively comprise any other shape, size or configuration to facilitate the transition such as a solid or hollow body with an elliptical, square, rectangular or any other geometric or non-geometric cross-section. Moreover, the root portion 208 of the root assembly 310 can comprise any material suitable for the rotor blade 108 of the wind turbine 100 (FIG. 1) such as, for example, one or more composite, metal, alloy, wood, or reinforced fabric materials or the like. In some embodiments, the root portion 208 of the root assembly 310 may comprise the same material as the airfoil portion 205 of the rotor blade 208. In other embodiments, the root portion 208 may comprise a different material than the airfoil portion 205 of the rotor blade 208.

The root portion 208 of the root assembly 310 thereby comprises at least an outer surface 210 and potentially an inner surface 209 (such as when the root portion 208 is hollow as illustrated in FIG. 2). The root portion 208 further comprises a hub-facing surface 211 that can be configured to be disposed flush against the hub 110 of the wind turbine 100. In some embodiments, the root portion 208 may comprise one or more lateral connection slots 212 that extend between the outer surface 210 to the inner surface 209 or for any portion thereof. The one or more lateral connection slots 212 can be circumferentially dispersed around the root portion 208 and can be used for the connection of at least one external structural connection support 311 to the root portion 208 as will become appreciated herein. In even some embodiments (not illustrated), the root portion 208 may comprise one or more axial connection slots that extend from the hub-facing surface 211 axially into the root portion 208. However, in some embodiments, the root portion 208 may be void of any such axial connection slots (such as illustrated in FIGS. 2-7) such as when avoiding the use of any axial connection directly between the hub 110 and the root portion 208 as will also become appreciated herein.

As best illustrated in FIG. 3, the root assembly 310 of the rotor blade 108 further comprises at least one external structural connection support 311. The at least one external structural connection support 311 connects to at least the inner surface 209 (when present) or the outer surface 210 of the root portion 208 of the root assembly. Furthermore, the at least one external structural connection support 311 further connects to the hub 110 of the wind turbine 100 (FIG. 1). By connecting to both the root portion 208 of the root assembly 310 of the rotor blade 108 as well as the hub 110 of the wind turbine 100, the at least one external structural connection support 311 facilitates the connection of the rotor blade 108 to the hub 110 of the wind turbine 100. As used herein, "facilitate" means connecting the rotor blade 108 to the hub 110 with no direct connections there between. For example, a facilitated connection between the rotor blade 108 and the hub 110 would have no axial connection from the hub 110 directly into the rotor blade 108. By using the at least one external structural connection support 311 to facilitate the connection between the rotor blade 108 and the hub 110, the connection is not limited by the size, location and material restraints from axially inserting bolts (or other connection supports) directly into the root portion 208 of the rotor blade 108.

The indirect connection between the rotor blade 108 and the hub 110 via the at least one external structural connection support 311 may be realized through a variety of external structural connection support 311 configurations including various numbers, positions, shapes and connection types. While not intended to be exhaustive, some exemplary such external structural connection support 311 configurations will be described herein for illustrative purposes.

Referring to FIGS. 1 and 3, in a first embodiment, at least one external structural connection support 311 may be utilized to facilitate the connection between the hub 108 and the rotor blade 110 of the wind turbine 100. As illustrated best in FIG. 3, the at least one external structural connection support 311 can comprise a flange face 318 and a tapered base 319. The flange face 318 can comprise the face of the external structural connection support 311 that faces the hub 110 of the wind turbine 100 when the root portion 208 of the rotor blade 108 is connected thereto. The flange face 318 can comprise any surface configuration to compliment the adjacent surface of the hub 110. Furthermore, in some embodiments, the flange face 318 can comprise one or more hub connection slots 313 that are slots directed into the external structural connection support 311 from the flange face 318. The hub connection slots 313 can thereby be used to receive bolts, pins 315 or any other structural support to connect the external structural connection support 311 to the hub 110. Moreover, the hub connection slots 313 can be present in any number and any configuration to assist in said connection. In some embodiments, the thickness of the flange face 318 may be less than the thickness of the root portion 208 of the rotor blade 108 so as to minimize the additional material added to the root portion 208 of the rotor blade 108.

The tapered base 319 can comprise an extension of the external structural connection support 311 that extends from the flange face 318 towards the rest of the rotor blade 108. By extending towards the rotor blade 108, the tapered base 319 can distribute the forces brought about with the connection to the hub 110 over a greater area. The tapered base 319 can comprise any size and configuration that thereby transitions the flange face 318 to the rest of the rotor blade 108. In some embodiments, the tapered base 319 can comprise one or more root connection slots 312. The root connection slots 312 can comprise slots directed into the external structural connection support 311 from its exterior to assist in the connection between the external structural connection support 311 and the rotor blade 108. The root connection slots 312 can thereby be used to receive bolts, pins 315 or any other structural support to connect the external structural connection support 311 to the rotor blade 108. Furthermore, the root connection slots 312 can be present in any number and any configuration to assist in said connection.

As illustrated in the embodiment presented in FIG. 3, a single external structural connection support 311 may be utilized to facilitate the connection of the root portion 208 of the rotor blade 108 to the wind turbine 100. The single external structural connection support 311 may extend around any amount of the circumference of the root portion 208 of the rotor blade 108 such as half of the circumference as illustrated or as a ring that extends around the entire circumference of the root portion. Moreover, the single external structural connection support 311 may connect to the outer surface of the root portion 208 (as illustrated) or the inner surface of the root portion 208.

Referring now to FIGS. 2 and 4, in some embodiments, multiple external structural connection supports 411 may be utilized to facilitate the connection between the root portion 208 of the rotor blade 108 and the hub 110. In such embodiments, each external structural connection supports 411 can comprise a flange face 418 and a tapered base 419. Similar to the embodiments discussed above, the flange face 418 can comprise the face of the external structural connection support 411 that faces the hub 110 of the wind turbine 100 when the root portion 208 of the rotor blade 108 is connected thereto. The flange face 418 can comprise any surface configuration to compliment the adjacent surface of the hub 110. Furthermore, in some embodiments, the flange face 418 can comprise one or more hub connection slots 413 that are slots directed into the external structural connection support 411 from the flange face 418. The hub connection slots 413 can thereby be used to receive bolts, pins 415 or any other structural support to connect the external structural connection support 411 to the hub 110. Moreover, the hub connection slots 413 can be present in any number and any configuration to assist in said connection. In some embodiments, the thickness of the flange face 418 may be less than the thickness of the root portion 208 of the rotor blade 108 so as to minimize the additional material added to the root portion 208 of the rotor blade 108.

Likewise, the tapered base 419 can comprise an extension of the external structural connection support 411 that extends from the flange face 418 towards the rest of the rotor blade 108. By extending towards the rotor blade 108, the tapered base 419 can distribute the forces brought about with the connection to the hub 110 over a greater area. The tapered base 419 can comprise any size and configuration that thereby transitions the flange face 418 to the rest of the rotor blade 108. In some embodiments, the tapered base 419 may comprise one or more root connection slots 412. The root connection slots 412 can comprise slots directed into the external structural connection support 411 from its exterior to assist in the connection between the external structural connection support 411 and the rotor blade 108. The root connection slots 412 can thereby be used to receive bolts, pins 415 or any other structural support to connect the external structural connection support 411 to the rotor blade 108. Furthermore, the root connection slots 412 can be present in any number and any configuration to assist in said connection.

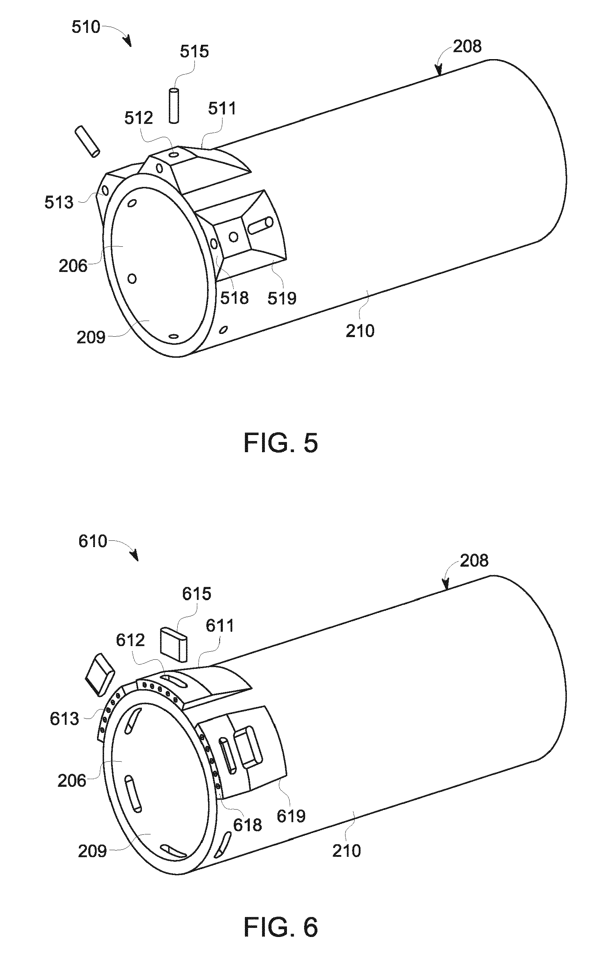

As illustrated in the embodiment presented in FIG. 4, a plurality of external structural connection supports 411 may be utilized to facilitate the connection of the root portion 208 of the rotor blade 108 to the wind turbine 100. The plurality of external structural connection support 411 may each extend around any portion of the circumference of the root portion 208 of the rotor blade 108. For example, each of the plurality of external structural connection supports 411 may extend for an equal portion around the root portion 208 of the rotor blade 108. In some embodiments, the plurality of external structural connection supports 411 may extend for different amounts around the root portion 208 of the rotor blade 108. Moreover, the plurality of external structural connection supports 411 may connect to the outer surface of the root portion 208 (as illustrated), the inner surface of the root portion 208 or combinations thereof. Likewise, the plurality of external structural connection supports 411 may be connected to just one half of the root portion 208 of the rotor blade 108 (such as the top half as illustrated in FIG. 4) or all around the root portion 208 of the rotor blade 108. Finally, each of the plurality of external structural connection supports 411 may comprise either identical or different configurations of flange faces 418 and tapered bases 419 (along with root connection slots 412 and hub connection slots 413). Referring now to FIGS. 2 and 5, in some embodiments, multiple external structural connection supports 511 having wider bases may be utilized to facilitate the connection between the root portion 208 of the rotor blade 108 and the hub 110. In such embodiments, each external structural connection supports 511 can comprise a flange face 518 and a wide tapered base 519. Similar to the embodiments discussed above, the flange face 518 can comprise the face of the external structural connection support 511 that faces the hub 110 of the wind turbine 100 when the root portion 208 of the rotor blade 108 is connected thereto. The flange face 518 can comprise any surface configuration to compliment the adjacent surface of the hub 110. Furthermore, in some embodiments, the flange face 518 can comprise one or more hub connection slots 513 that are slots directed into the external structural connection support 511 from the flange face 518. The hub connection slots 513 can thereby be used to receive bolts, pins 515 or any other structural support to connect the external structural connection support 511 to the hub 110. Moreover, the hub connection slots 513 can be present in any number and any configuration to assist in said connection. In some embodiments, the thickness of the flange face 518 may be less than the thickness of the root portion 208 of the rotor blade 108 so as to minimize the additional material added to the root portion 208 of the rotor blade 108.

Likewise, the wide tapered base 519 can comprise an extension of the external structural connection support 511 that extends from the flange face 518 towards the rest of the rotor blade 108. The wide tapered base 519 can have a sider base portion than top portion to even further distribute the forces brought about with the connection to the hub 110 over a greater area. The wide tapered base 519 can comprise any size and configuration that thereby transitions the flange face 518 to the rest of the rotor blade 108. In some embodiments, the wide tapered base 519 may comprise one or more root connection slots 512. The root connection slots 512 can comprise slots directed into the external structural connection support 511 from its exterior to assist in the connection between the external structural connection support 511 and the rotor blade 108. The root connection slots 412 can thereby be used to receive bolts, pins 515 or any other structural support to connect the external structural connection support 511 to the rotor blade 108. Furthermore, the root connection slots 512 can be present in any number and any configuration to assist in said connection.

Referring now to FIGS. 2 and 6, in some embodiments, multiple external structural connection supports 611 with elongated pins 615 may be utilized to facilitate the connection between the root portion 208 of the rotor blade 108 and the hub 110. In such embodiments, each external structural connection supports 611 can comprise a flange face 618 and a tapered base 619. Similar to the embodiments discussed above, the flange face 618 can comprise the face of the external structural connection support 611 that faces the hub 110 of the wind turbine 100 when the root portion 208 of the rotor blade 108 is connected thereto. The flange face 618 can comprise any surface configuration to compliment the adjacent surface of the hub 110. Furthermore, in some embodiments, the flange face 618 can comprise one or more hub connection slots 613 that are slots directed into the external structural connection support 611 from the flange face 618. The hub connection slots 613 can thereby be used to receive bolts, pins 615 or any other structural support to connect the external structural connection support 611 to the hub 110. Moreover, the hub connection slots 613 can be present in any number and any configuration to assist in said connection. In some embodiments, the thickness of the flange face 618 may be less than the thickness of the root portion 208 of the rotor blade 108 so as to minimize the additional material added to the root portion 208 of the rotor blade 108.

Likewise, the tapered base 619 can comprise an extension of the external structural connection support 611 that extends from the flange face 618 towards the rest of the rotor blade 208. By extending towards the rotor blade 108, the tapered base 619 can distribute the forces brought about with the connection to the hub 110 over a greater area. The tapered base 619 can comprise any size and configuration that thereby transitions the flange face 619 to the rest of the rotor blade 108. In some embodiments, the tapered base 619 may comprise one or more elongated root connection slots 612. The elongated root connection slots 612 can comprise elongated (e.g., oblong, oval or the like) slots directed into the external structural connection support 611 from its exterior to assist in the connection between the external structural connection support 611 and the rotor blade 108. The elongated root connection slots 612 can thereby be used to receive elongated structural supports to connect the external structural connection support 611 to the rotor blade 108 over a wider area than a circular pin. Furthermore, the elongated root connection slots 612 can be present in any number and any configuration to assist in said connection.

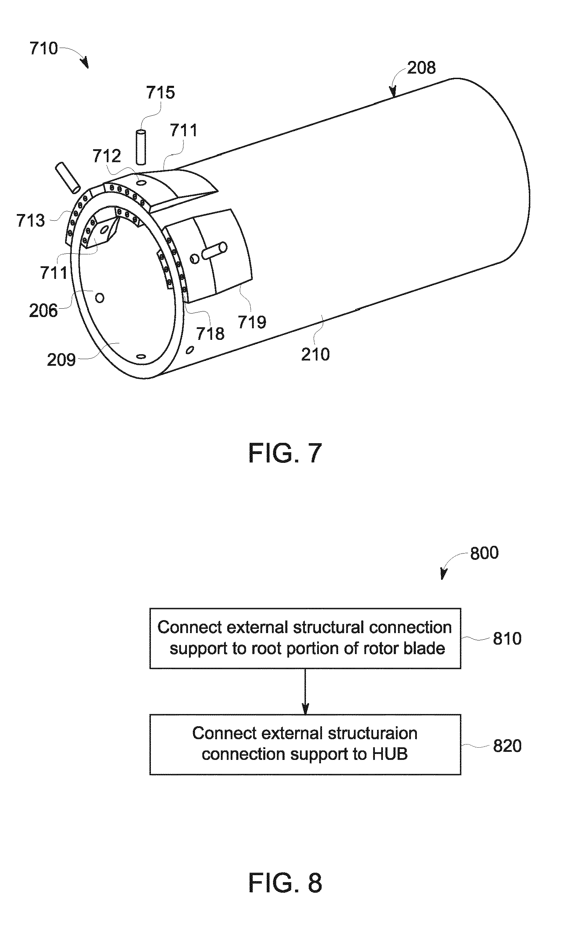

Referring now to FIGS. 2 and 7, in some embodiments, multiple external structural connection supports 711 may be utilized on both the inner surface and outer surface of the root portion 208 to facilitate the connection between the root portion 208 of the rotor blade 108 and the hub 110. In such embodiments, each external structural connection supports 711 can comprise a flange face 718 and a tapered base 719. Similar to the embodiments discussed above, the flange face 718 can comprise the face of the external structural connection support 711 that faces the hub 110 of the wind turbine 100 when the root portion 208 of the rotor blade 108 is connected thereto. The flange face 718 can comprise any surface configuration to compliment the adjacent surface of the hub 110. Furthermore, in some embodiments, the flange face 718 can comprise one or more hub connection slots 713 that are slots directed into the external structural connection support 711 from the flange face 718. The hub connection slots 713 can thereby be used to receive bolts, pins 715 or any other structural support to connect the external structural connection support 711 to the hub 110. Moreover, the hub connection slots 713 can be present in any number and any configuration to assist in said connection. In some embodiments, the thickness of the flange face 718 may be less than the thickness of the root portion 208 of the rotor blade 108 so as to minimize the additional material added to the root portion 208 of the rotor blade 108.

Likewise, the tapered base 719 can comprise an extension of the external structural connection support 711 that extends from the flange face 718 towards the rest of the rotor blade 208. By extending towards the rotor blade 108, the tapered base 719 can distribute the forces brought about with the connection to the hub 110 over a greater area. The tapered base 719 can comprise any size and configuration that thereby transitions the flange face 719 to the rest of the rotor blade 108. In some embodiments, the tapered base 719 may comprise one or more root connection slots 712. The root connection slots 712 can comprise slots directed into the external structural connection support 711 from its exterior to assist in the connection between the external structural connection support 711 and the rotor blade 108. The root connection slots 712 can thereby be used to receive bolts, pins 715 or any other structural support to connect the external structural connection support 711 to the rotor blade 108. Furthermore, the root connection slots 412 can be present in any number and any configuration to assist in said connection.

As illustrated in the embodiment presented in FIG. 7, a plurality of external structural connection supports 711 may be utilized on both the inner surface 209 and the outer surface 210 of the root portion 208 to facilitate the connection of the root portion 208 of the rotor blade 108 to the wind turbine 100. By placing external structural connection supports 711 on both the inner and outer surfaces, the overall facilitated connection can provide greater force distribution at multiple locations to help ensure a secured rotor blade 106. Moreover, the plurality of external structural connection support 711 may each extend around any portion of the circumference of the root portion 208 of the rotor blade 108. For example, each of the plurality of external structural connection supports 711 may extend for an equal portion around the root portion 208 of the rotor blade 108. In some embodiments, the plurality of external structural connection supports 711 may extend for different amounts around the root portion 208 of the rotor blade 108. Furthermore, each of the plurality of external structural connection supports 711 may comprise either identical or different configurations of flange faces 718 and tapered bases 719 (along with root connection slots 712 and hub connection slots 713).

While specific embodiments of external structural connection supports have been presented herein, it should be appreciated that these configurations (e.g., numbers and placements) are exemplary and non-limiting. Other suitable arrangements of external structural connection supports facilitating the connection between the root portion 208 of the rotor blade 108 and the hub 110 may additionally or alternatively be realized. For example, in some embodiments, adhesives may be used to connect the external structural connection support to the root portion 208 of the rotor blade 108 and/or the hub 110. In other embodiments, screws, pins, bolts or the like may be used alone or in combination to secure the external structural connection support to the root portion 208 of the rotor blade 108 and/or the hub 110.

The external structural connection supports, the rotor blades 108 and the hubs 110 can comprise any material or combinations of material suitable for a wind turbine 100. For example, in some embodiments, the external structural connection support, the rotor blades 108 and the hubs 110 may mostly or completely comprise composite materials. Furthermore, the external structural connection supports, the rotor blades 108 and the hubs 110 can comprise the same material, similar materials, different materials, or combinations thereof.

Referring now to FIGS. 1-3 and 8, a method 800 (FIG. 8) is illustrated for attaching a rotor blade 108 to a hub 110 of a wind turbine 100. The method 800 first comprises connecting at least one external structural connection support 311 to the root portion 208 of the rotor blade 108 in step 810. As discussed above, the at least one external structural connection support 311 may be connected to the root portion 208 of the rotor blade 108 using a variety of methods including pins, bolts, screws or adhesives and may depend on the specific configuration of the external structural connection support 311 (e.g., the presence of root connection slots 312). In some embodiments, step 810 may be repeated so that multiple external structural connection supports 311 are connected to the root portion 208 of the rotor blade 108.

The method 800 further comprises connecting the at least one external structural connection support 311 to the hub 110 in step 820. Similar to step 810, the external structural connection support 311 may be connected to the hub 110 using a variety of methods including pins, bolts, screws or adhesives and may depend on the specific configuration of the external structural connection support 311 (e.g., the presence of hub connection slots 313). In some embodiments, the steps 810 and 820 may be reversed. In embodiments comprising multiple external structural connection supports 311, steps 810 and 820 may alternate, occur simultaneously or combinations thereof. Furthermore, in some embodiments, the method 800 may specifically exclude connecting the root portion 208 of the rotor blade 108 directly to the hub 110 so that the root portion 208 of the rotor blade 108 is only connected to the hub 110 via the facilitating at least one external structural connection support 311.

It should now be appreciated that root assemblies for turbine blades can be connected to hubs of wind turbines using external structural connection supports. By connecting at least one external structural connection support directly to the rotor blade, and then connecting the same external structural connection supports directly to the hub, the overall rotor blade may be connected to the hub with few or no direct connections there between. This can avoid the use of bolts, screws or other support structures that are inserted into the rotor blade itself. In turn, strength of the rotor blades may increase while manufacturing time and costs may decrease.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A root assembly (310,410,510,610,710) for a rotor blade, the root assembly comprising:
a root portion (208) having an inner surface (209) and an outer surface (210), wherein the root portion is configured to extend from an airfoil portion (205) of the rotor blade (108); and,
at least one external structural connection support (311,411,511,611,711) connected to at least the inner surface (209) or the outer surface (210) of the root portion (208), wherein the at least one external structural connection support (311,411,511,611,711) connects to a hub (110) of a wind turbine (100) to facilitate the connection of the rotor blade (108).

2. The root assembly of claim 1 further comprising a plurality of external structural connection supports (311,411,511,611,711), wherein each of the plurality of external structural connection supports are connected to at least the inner surface (209) or the outer surface (210) of the root portion (208) and connect to the hub (110) of the wind turbine (100) to facilitate the connection of the rotor blade (108).

3. The root assembly of claim 2, wherein a first external structural connection support (311,411,511,611,711) is connected to the outer surface (210) of the root portion (208) and a second external structural connection support is connected to the inner surface (209) of the root portion (208).

4. The root assembly of any of claims 1 to 3, wherein the at least one external structural connection support comprises a ring that extends around an entire circumference of the root portion (208).

5. The root assembly of any of claims 1 to 4, wherein the at least one external structural connection support (311,411,511,611,711) is connected to the root portion (208) via one or more pins (315,415,515,615,715).

6. The root assembly of any of claims 1 to 5, wherein the rotor blade (108) is connected to the hub (110) only via the at least one external structural connection support (311,411,511,611,711).

7. The root assembly of any preceding claim, wherein the at least one external structural connection support (311,411,511,611,711) comprises a flange face (318,418,518,618,718) that faces the hub (110) and a tapered base (319,419,519,619,719) that extends from the flange face (318,418,518,618,718) towards the rotor blade (108).

8. A turbine blade comprising:
an airfoil portion (205); and,
the root assembly (310,410,510,610,710) of any preceding claim.

9. The turbine blade of claim 8, wherein the root portion (208) is integral with the airfoil portion (205).
